(19) Europäisches Patentamt
European Patent Office
Office européen des brevets

(11) **EP 3 617 908 A1**

(12) **EUROPEAN PATENT APPLICATION**
published in accordance with Art. 153(4) EPC

(43) Date of publication:
**04.03.2020 Bulletin 2020/10**

(51) Int Cl.:
***G06F 17/28*** *(2006.01)*

(21) Application number: **18806246.7**

(22) Date of filing: **25.05.2018**

(86) International application number:
**PCT/CN2018/088387**

(87) International publication number:
**WO 2018/214956 (29.11.2018 Gazette 2018/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.05.2017 CN 201710386617**

(71) Applicant: **Huawei Technologies Co., Ltd.
Longgang District
Shenzhen, Guangdong 518129 (CN)**

(72) Inventors:
• **TU, Zhaopeng
Shenzhen
Guangdong 518129 (CN)**
• **LIU, Xiaohua
Shenzhen
Guangdong 518129 (CN)**
• **LI, Hang
Shenzhen
Guangdong 518129 (CN)**

(74) Representative: **Gill Jennings & Every LLP
MTH
The Broadgate Tower
20 Primrose Street
London EC2A 2ES (GB)**

(54) **MACHINE TRANSLATION METHOD AND APPARATUS, AND STORAGE MEDIUM**

(57) This disclosure provides a machine translation method and apparatus, and a storage medium, and belongs to the field of communications network technologies. The method includes: obtaining a to-be-translated source document, where the source document includes at least one character of a source language; converting the source document into a plurality of target documents respectively by using a plurality of machine translation apparatuses, where one machine translation apparatus is configured to translate the source document into one target document, the target document includes at least one character of a target language, and the source language is different from the target language; determining a feature value of each preset feature of each target document; determining a recommendation rating of each target document based on the feature value of each preset feature of each target document; and outputting a target document with a highest recommendation rating based on the recommendation rating of each target document. According to this disclosure, the target document is translated by using the plurality of machine translation apparatuses, and the target document is output based on the recommendation rating of each target document, thereby improving accuracy of machine translation.

FIG. 3

**Description**

This application claims priority to Chinese Patent Application No. 201710386617.5, filed with the Chinese National Intellectual Property Administration on May 26, 2017 and entitled "MACHINE TRANSLATION METHOD AND APPARATUS", which is incorporated herein by reference in its entirety.

**TECHNICAL FIELD**

This disclosure relates to the field of communications network technologies, and in particular, to a machine translation method and apparatus, and a storage medium.

**BACKGROUND**

With rapid development of social science and technology and economy, information exchange between different languages has become an important part of information communication, and accompanying demands for various language services, especially translation services, become more extensive. However, currently, translators, especially high-end translators, are in seriously short supply. In addition, during translation, a translator spends a lot of time in searching for and translating specialized vocabulary, resulting in low efficiency and high costs in translation. Therefore, as an automatic translation method, machine translation has become an important tool to assist human translation. Machine translation is a translation method for performing automatic translation by using a machine translation apparatus.

Currently, a machine translation apparatus includes a statistical machine translation apparatus and a neural network machine translation apparatus. In the prior art, machine translation is performed by using the statistical machine translation apparatus, or by using the neural network machine translation apparatus. A process of translation by using the statistical machine translation apparatus may be: splitting a to-be-translated source document into at least one phrase, translating each phrase to obtain one translation segment, and splicing all translation segments into a target document. A process of translation by using the neural network machine translation apparatus may be: vectorizing each sentence in a to-be-translated source document, transferring each vectorized sentence in a network layer by layer to convert each vectorized sentence into a computer-understandable representation form, and generating a target document through multi-layer complex conduction operations.

In a process of implementing this disclosure, the inventor finds that the prior art has at least the following problem:

The statistical machine translation apparatus splices all translation segments into the target document, resulting in low fluency of the target document; and a translation generated by the neural network machine translation apparatus cannot completely reflect a meaning of the source document, and under-translation, over-translation, or the like frequently occurs, resulting in low fidelity of the translation. It can be learned that the foregoing machine translation method has low accuracy.

**SUMMARY**

Embodiments of this disclosure provide a machine translation method and apparatus, and a storage medium, so as to resolve a problem in the prior art. The technical solutions are as follows.

According to a first aspect, a machine translation method is provided, where the method includes:

obtaining a to-be-translated source document, where the source document includes at least one character of a source language;

converting the source document into a plurality of target documents respectively by using a plurality of machine translation apparatuses, where one machine translation apparatus is configured to translate the source document into one target document, the target document includes at least one character of a target language, and the source language is different from the target language;

determining a feature value of each preset feature of each target document, where a feature value of any preset feature of any target document is used to evaluate fluency and/or fidelity of the any target document;

determining a recommendation rating of each target document based on the feature value of each preset feature of each target document; and

outputting a target document with a highest recommendation rating based on the recommendation rating of each target document.

In this embodiment of this disclosure, the source document is converted into the target documents by using the plurality of machine translation apparatuses, the recommendation rating of each target document is determined, and the target document with the highest recommendation rating is output. The target document is translated by using the plurality of machine translation apparatuses, and the target document is output based on the recommendation rating of each target document, thereby improving accuracy of machine translation.

In a possible implementation, the determining a recommendation rating of each target document based on the feature value of each preset feature of each target document includes:

determining the recommendation rating of each target document by using a preset recommendation rating algorithm based on the feature value of each preset feature of each target document, and a datum feature weight and a datum feature offset of each preset feature, where the datum feature weight and the datum feature offset of each preset feature are obtained through training based on a first sample document set and a first sample translation set, the first sample document set includes at least one to-be-translated sample document, and the first sample translation set includes a reference translation corresponding to each sample document.

In this embodiment of this disclosure, the recommendation rating of each target document is determined by using the preset recommendation rating algorithm based on the feature value of each preset feature of each target document, and the datum feature weight and the datum feature offset of each preset feature. In combination with the datum feature weight and the datum feature offset of each preset feature, accuracy of the determined recommendation rating of each target document can be improved. Then, the target document is output based on the recommendation rating of each target document, thereby improving accuracy of machine translation.

In a possible implementation, before the determining a recommendation rating of each target document based on the feature value of each preset feature of each target document, the method further includes:

obtaining the first sample document set and the first sample translation set;
determining a second sample translation set based on the first sample document set, where the second sample translation set includes a sample translation corresponding to each sample document;
determining a first error recommendation rate based on the first sample translation set and the second sample translation set; and
determining the datum feature weight and the datum feature offset of each preset feature based on the first error recommendation rate, and an initial feature weight and an initial feature offset that are of each preset feature.

In this embodiment of this disclosure, the datum feature weight and the datum feature offset of each preset feature are obtained through training by using the first sample document set and the first sample translation set, thereby improving accuracy of the determined datum feature weight and datum feature offset of each preset feature.

In a possible implementation, the determining a second sample translation set based on the first sample document set includes:

converting each sample document in the first sample document set into a plurality of sample translation sets respectively by using the plurality of machine translation apparatuses, where one sample translation set includes at least one target-language sample translation into which one machine translation apparatus translates each sample document;
determining a feature value of each preset feature of each sample translation in the plurality of sample translation sets;
determining a recommendation rating of each sample translation based on the feature value of each preset feature of each sample translation, and an initial feature weight and an initial feature offset that are of each preset feature; and
determining the second sample translation set based on the recommendation rating of each sample translation.

In a possible implementation, the determining the datum feature weight and the datum feature offset of each preset feature based on the first error recommendation rate, and an initial feature weight and an initial feature offset that are of each preset feature includes:

if the first error recommendation rate meets a preset condition, determining the initial feature weight and the initial feature offset of each preset feature as the datum feature weight and the datum feature offset of each preset feature, respectively; or
if the first error recommendation rate does not meet a preset condition, updating the initial feature weight and the initial feature offset of each preset feature by using a preset iterative algorithm until a second error recommendation rate meets the preset condition, where the second error recommendation rate is determined based on an updated initial feature weight and an updated initial feature offset; and determining a feature weight and a feature offset used when the second error recommendation rate meets the preset condition as the datum feature weight and the datum feature offset of each preset feature.

In this embodiment of this disclosure, the datum feature weight and the datum feature offset of each preset feature are determined based on the first error recommendation rate and the preset iterative algorithm, thereby improving accuracy of the determined datum feature weight and datum feature offset of each preset feature.

In a possible implementation, the determining a first error recommendation rate based on the first sample translation set and the second sample translation set includes:

determining a third sample translation set and a second sample document set based on the first sample translation set and the second sample translation set, where the third sample translation set includes different sample translations between the first sample translation set and the second sample translation set, and the second sample document set includes sample documents corresponding to the different sample translations;

determining a recommendation coefficient of each sample document in the second sample document set based on a recommendation rating of each sample translation in the third sample translation set;

determining a sample quantity ratio of a first sample quantity to a second sample quantity, where the first sample quantity is a quantity of sample documents included in the second sample document set, and the second sample quantity is a quantity of sample documents included in the first sample document set; and

determining a product of the sample quantity ratio and the recommendation coefficient of each sample document in the second sample document set, to obtain the first error recommendation rate.

In this embodiment of this disclosure, the first error recommendation rate is determined in combination with the determined sample quantity ratio of the first sample quantity to the second sample quantity and a recommendation rating of each sample document in the second sample document set, thereby improving accuracy of the determined first error recommendation rate.

In a possible implementation, the determining a recommendation coefficient of each sample document in the second sample document set based on a recommendation rating of each sample translation document in the third sample translation document set includes:

determining a recommendation weight of each sample document in the second sample document set based on the recommendation rating of each sample translation in the third sample translation set;

determining a ratio of the recommendation weight of each sample document in the second sample document set to a preset recommendation rating to obtain a recommendation rating ratio of each sample document in the second sample document set; and

determining a ratio of the recommendation weight of each sample document in the second sample document set to a preset recommendation rating to obtain a recommendation rating ratio of the sample document, and selecting a smaller value between the recommendation rating ratio of the sample document and a preset recommendation weight as the recommendation coefficient of the sample document.

In this embodiment of this disclosure, the recommendation coefficient of each sample document in the second sample document set is determined based on the recommendation rating ratio of the sample document and the preset recommendation weight, thereby improving accuracy of the determined recommendation coefficient of each sample document.

In a possible implementation, the preset feature includes a first-type preset feature and/or a second-type preset feature, the first-type preset feature is used to evaluate fluency of a target document, and the second-type preset feature is used to evaluate fidelity of the target document; and

the determining a feature value of each preset feature of each target translation includes:

extracting a feature value of each first-type preset feature of each target translation by using an extraction algorithm of each first-type preset feature; and/or extracting a feature value of each second-type preset feature of each target translation by using an extraction algorithm of each second-type preset feature; and

using the feature value of each first-type preset feature of each target translation and/or the feature value of each second-type preset feature of each target translation to form a feature value of each preset feature of each target feature.

In this embodiment of this disclosure, the preset feature includes the first-type preset feature and the second-type preset feature, and the recommendation rating of each target document is subsequently determined in combination with the first-type preset feature and the second-type preset feature, thereby improving accuracy of the determined recommendation rating of each target document.

According to a second aspect, a machine translation apparatus is provided, where the apparatus includes:

an obtaining unit, configured to obtain a to-be-translated source document, where the source document includes at least one character of a source language;

a translation unit, configured to convert the source document into a plurality of target documents respectively by using a plurality of machine translation apparatuses, where one machine translation apparatus is configured to translate the source document into one target document, the target document includes at least one character of a target language, and the source language is different from the target language;

a determining unit, configured to determine a feature value of each preset feature of each target document, where a feature value of any preset feature of any target document is used to evaluate fluency and/or fidelity of the any target document, where

the determining module is further configured to determine a recommendation rating of each target document based on the feature value of each preset feature of each target document; and

an output unit, configured to output a target document with a highest recommendation rating based on the recommendation rating of each target document.

In a possible implementation, the determining unit is further configured to determine the recommendation rating of each target document by using a preset recommendation rating algorithm based on the feature value of each preset feature of each target document, and a datum feature weight and a datum feature offset of each preset feature, where the datum feature weight and the datum feature offset of each preset feature are obtained through training based on a first sample document set and a first sample translation set, the first sample document set includes at least one to-be-translated sample document, and the first sample translation set includes a reference translation corresponding to each sample document.

In a possible implementation, the apparatus further includes:

the obtaining unit is further configured to obtain the first sample document set and the first sample translation set;

the determining unit is further configured to determine a second sample translation set based on the first sample document set, where the second sample translation set includes a sample translation corresponding to each sample document;

the determining unit is further configured to determine a first error recommendation rate based on the first sample translation set and the second sample translation set; and

the determining unit is further configured to determine the datum feature weight and the datum feature offset of each preset feature based on the first error recommendation rate, and an initial feature weight and an initial feature offset that are of each preset feature.

In a possible implementation, the translation unit is further configured to convert each sample document in the first sample document set into a plurality of sample translation sets respectively by using the plurality of machine translation apparatuses, where one sample translation set includes at least one target-language sample translation into which one machine translation apparatus translates each sample document; and

the determining unit is further configured to: determine a feature value of each preset feature of each sample translation in the plurality of sample translation sets; determine a recommendation rating of each sample translation based on the feature value of each preset feature of each sample translation, and an initial feature weight and an initial feature offset that are of each preset feature; and determine the second sample translation set based on the recommendation rating of each sample translation.

In a possible implementation, the determining unit is further configured to: if the first error recommendation rate meets a preset condition, determine the initial feature weight and the initial feature offset of each preset feature as the datum feature weight and the datum feature offset of each preset feature, respectively; or

the determining unit is further configured to: if the first error recommendation rate does not meet a preset condition, update the initial feature weight and the initial feature offset of each preset feature by using a preset iterative algorithm until a second error recommendation rate meets the preset condition, where the second error recommendation rate is determined based on an updated initial feature weight and an updated initial feature offset, and determine a feature weight and a feature offset used when the second error recommendation rate meets the preset condition as the datum feature weight and the datum feature offset of each preset feature.

In a possible implementation, the determining unit is further configured to: determine a third sample translation set and a second sample document set based on the first sample translation set and the second sample translation set, where the third sample translation set includes different sample translations between the first sample translation set and the second sample translation set, and the second sample document set includes sample documents corresponding to the different sample translations; determine a recommendation coefficient of each sample document in the second sample document set based on a recommendation rating of each sample translation in the third sample translation set; determine a sample quantity ratio of a first sample quantity to a second sample quantity, where the first sample quantity is a quantity of sample documents included in the second sample document set, and the second sample quantity is a quantity of sample documents included in the first sample document set; and determine a product of the sample quantity ratio and the recommendation coefficient of each sample document in the second sample document set, to obtain the first error recommendation rate.

In a possible implementation, the determining unit is further configured to: determine a recommendation weight of each sample document in the second sample document set based on the recommendation rating of each sample translation in the third sample translation set; and determine a ratio of the recommendation weight of each sample document in the second sample document set to a preset recommendation rating to obtain a recommendation rating ratio of the sample document, and select a smaller value between the recommendation rating ratio of the sample document and a preset recommendation weight as the recommendation coefficient of the sample document.

In a possible implementation, the preset feature includes a first-type preset feature and/or a second-type preset feature, the first-type preset feature is used to evaluate fluency of a target document, and the second-type preset feature is used to evaluate fidelity of the target document;

the determining unit is further configured to: extract a feature value of each first-type preset feature of each target translation by using an extraction algorithm of each first-type preset feature; and/or extract a feature value of each second-type preset feature of each target translation by using an extraction algorithm of each second-type preset feature; and

the determining unit is further configured to use the feature value of each first-type preset feature of each target translation and/or the feature value of each second-type preset feature of each target translation to form a feature value of each preset feature of each target feature.

According to a third aspect, a machine translation apparatus is provided, where the apparatus includes: a processing component further including one or more processors, and a memory resource represented by a memory and configured to store an instruction that is executable by the processing component, for example, an application program. The application program stored in the memory may include one or more modules, each of which corresponds to one group of instructions. In addition, the processing component is configured to execute the instruction, to perform the machine translation method according to the first aspect.

According to a fourth aspect, a system chip is provided, where the system chip includes an input/output interface, at least one processor, a memory, and a bus; the input/output interface is connected to the at least one processor and the memory by using the bus; the input/output interface is configured to obtain a to-be-translated source document and output a target document; and the at least one processor executes an instruction stored in the memory, so that a machine translation system performs the machine translation method according to the first aspect.

According to a fifth aspect, a computer readable storage medium is provided, where a computer program is stored in the computer readable storage medium, and when the program is executed by a processor, the machine translation method according to any implementation of the first aspect is implemented.

The technical solutions provided in the embodiments of this disclosure bring the following beneficial effects: In the embodiments of this disclosure, the target document is converted into the target documents by using the plurality of machine translation apparatuses, the recommendation rating of each target document is determined, and the target document with the highest recommendation rating is output. The target document is translated by using the plurality of machine translation apparatuses, and the target document is output based on the recommendation rating of each target document, thereby improving accuracy of machine translation.

## BRIEF DESCRIPTION OF DRAWINGS

FIG. 1 is a schematic diagram of a machine translation system according to an embodiment of this disclosure;
FIG. 2 is a flowchart of a machine translation method according to an embodiment of this disclosure;
FIG. 3 is a flowchart of a machine translation method according to an embodiment of this disclosure;
FIG. 4 is a schematic structural diagram of a machine translation apparatus according to an embodiment of this disclosure;
FIG. 5 is a block diagram of a machine translation apparatus according to an embodiment of this disclosure; and
FIG. 6 is a block diagram of a system chip according to an embodiment of this disclosure.

## DESCRIPTION OF EMBODIMENTS

To make the objectives, technical solutions, and advantages of this disclosure clearer, the following further describes in detail the implementations of this disclosure with reference to the accompanying drawings.

All the foregoing optional technical solutions may be combined in any form, to form an optional embodiment of this disclosure. Details are not described herein.

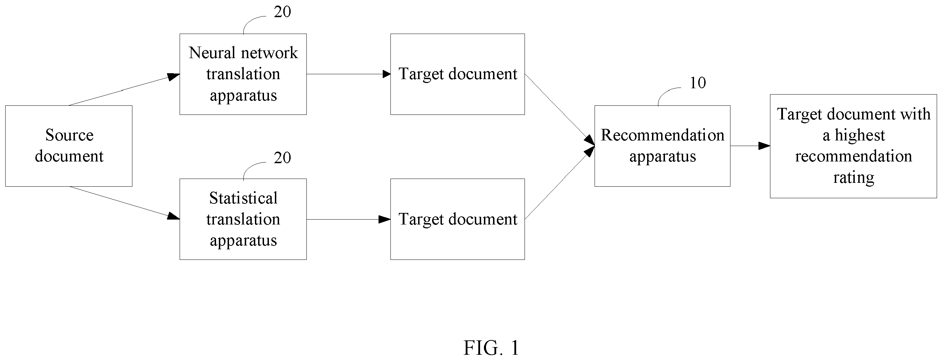

An embodiment of this disclosure provides a machine translation system. Referring to FIG. 1, the machine translation system includes: a recommendation apparatus 10 and a plurality of machine translation apparatuses 20. Each machine translation apparatus 20 is connected to the recommendation apparatus 10. Each machine translation apparatus 20 may be connected to the recommendation apparatus 10 in a wired manner or a wireless manner.

Each machine translation apparatus 20 is configured to: receive a to-be-translated source document, convert the source document into a target document, and send the target document to the recommendation apparatus 10. The plurality of machine translation apparatuses 20 may be a plurality of types of machine translation apparatuses. For example, the plurality of machine translation apparatuses 20 include a statistical machine translation apparatus 20 or a neural network machine translation apparatus 20.

The recommendation apparatus 10 is configured to: receive a target document sent by each machine translation apparatus 20; determine a feature value of each preset feature of each target document, where a feature value of any preset feature of any target document is used to evaluate fluency and/or fidelity of the any target document; and determine a recommendation rating of each target document based on the feature value of each preset feature of each target document.

The recommendation apparatus 10 is further configured to output a target document with a highest recommendation rating based on the recommendation rating of each target document.

The source document includes at least one character of a source language, the target document includes at least one character of a target language, and the source language is different from the target language. Both the source language and the target language can be set and changed as required. The source language is not specifically limited in this embodiment of this disclosure. For example, the source language may be Chinese, English, Japanese, French, or the like; the target language may be English, Japanese, French, or the like.

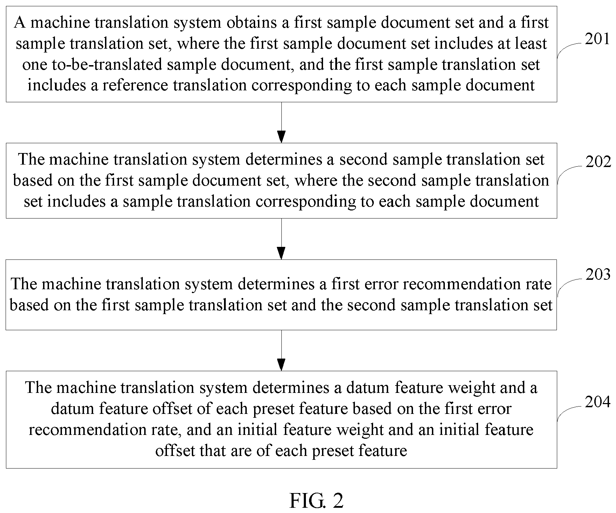

In this embodiment of this disclosure, when determining the recommendation rating of each target document, the recommendation apparatus determines the feature value of each preset feature of each target document, where the feature value of any preset feature is used to evaluate fluency and/or fidelity of the target document; and determines the recommendation rating of each target document by using a preset recommendation rating algorithm based on the feature value of each preset feature of each target document, and a datum feature weight and a datum feature offset of each preset feature. Therefore, before using a machine translation method provided in an embodiment of this disclosure, the machine translation system needs to first determine the datum feature weight and the datum feature offset of each preset feature. Referring to FIG. 2, a process of determining the datum feature weight and the datum feature offset of each preset feature by the machine translation system includes the following steps.

Step 201: The machine translation system obtains a first sample document set and a first sample translation set, where the first sample document set includes at least one to-be-translated sample document, and the first sample translation set includes a reference translation corresponding to each sample document.

To train parameters of the recommendation apparatus (the datum feature weight and the datum feature offset of each preset feature), before a user translates the source document by using the machine translation system, the machine translation system obtains sample data. The sample data includes the first sample document set and the first sample translation set. The first sample document set includes at least one to-be-translated sample document, and the first sample translation set includes the reference translation corresponding to each sample document in the first sample document set. The reference translation is a standard translation.

Before this step, the user labels at least one sample document, and inputs the at least one sample document to the machine translation system. The machine translation system receives the at least one sample document input by the user, and uses the at least one sample document to form the first sample document set.

After obtaining the first sample document set, the machine translation system converts each sample document in the first sample document set into a plurality of sample translations respectively by using a plurality of machine translation apparatuses. The user labels a reference translation from the plurality of sample translations corresponding to each sample document. The machine translation system obtains the reference translation, labeled by the user, of the sample document, and uses reference translations corresponding to all sample documents to form the first sample translation set.

It should be noted that each sample document includes at least one character of a source language, each sample translation includes at least one character of a target language, and the source language is different from the target language. The source language can be set and changed as required. The source language is not specifically limited in this embodiment of this disclosure. For example, the source language may be Chinese, English, Japanese, French, or the like. The target language can be set and changed as required. The target language is not specifically limited in this embodiment of this disclosure. For example, the target language may be English, Japanese, French, or the like.

Step 202: The machine translation system determines a second sample translation set based on the first sample document set, where the second sample translation set includes a sample translation corresponding to each sample document.

The second sample translation set is a sample translation set obtained after the machine translation system translates each sample document and recommends sample translations. This step may be implemented by using the following steps 2021 to 2024.

Step 2021: The machine translation system converts each sample document in the first sample document set into a plurality of sample translation sets by using the plurality of machine translation apparatuses.

One sample translation set includes at least one target-language sample translation into which one machine translation apparatus translates each sample document. Each machine translation apparatus converts each sample document in the first sample document set into at least one sample translation, and uses the at least one sample translation obtained through conversion to form a sample translation set.

For example, the first sample document set includes a sample document A, a sample document B, and a sample document C. The machine translation apparatuses are a neural network translation apparatus and a statistical translation apparatus. The neural network translation apparatus converts the sample document A, the sample document B, and the sample document C into target-language sample translations to obtain a sample translation A1, a sample translation B1, and a sample translation C1, and uses the sample translation A1, the sample translation B1, and the sample translation C1 to form a sample translation set 1. The statistical translation apparatus converts the sample document A, the sample document B, and the sample document C into target-language sample translations to obtain a sample translation A2, a sample translation B2, and a sample translation C2, and uses the sample translation A2, the sample translation B2, and the sample translation C2 to form a sample translation set 2.

Step 2022: The machine translation system determines a feature value of each preset feature of each sample translation in the plurality of sample translation sets.

The preset feature includes a first-type preset feature and a second-type preset feature. The first-type preset feature is used to evaluate fluency of a sample translation. The second-type preset feature is used to evaluate fidelity of the sample translation. The first-type preset feature includes a translation language model and/or a reordering model, and the like. The second-type preset feature includes an unregistered word, reconstruction, a translation length, a coverage ratio and/or a lexicalization probability, and the like. Correspondingly, this step may be:

extracting, by the machine translation system, a feature value of each first-type preset feature of each sample translation by using an extraction algorithm of each first-type preset feature; and/or extracting a feature value of each second-type preset feature of each sample translation by using an extraction algorithm of each second-type preset feature; and making, by the machine translation system, the feature value of each first-type preset feature of each sample translation and/or the feature value of each second-type preset feature of each sample translation form a feature value of each preset feature of each sample translation.

For each sample translation in the plurality of sample translation sets, when the preset feature includes the translation language model, the step in which the machine translation system obtains the feature value of the preset feature of the sample translation may be:

obtaining, by the machine translation system, a translation language model score of the sample translation. A higher translation language model score indicates higher fluency and higher quality of the translation.

When the preset feature includes the reordering model, the step in which the machine translation system obtains the feature value of the preset feature of the sample translation may be:

obtaining, by the machine translation system, a reordering model score of the sample translation. A main disadvantage of the statistical translation apparatus is a difficulty in reordering, generally resulting in sequential splicing of translations, and giving people a sense of machine translation. However, the neural network translation apparatus does a good job in this aspect, making a translation smooth. Therefore, the disadvantage can be overcome by obtaining a reordering model score of a sample translation, and a higher reordering model score indicates higher quality of the translation.

When the preset feature includes an unregistered word, the step in which the machine translation system obtains the feature value of the preset feature of the sample translation may be:

obtaining, by the machine translation system, a quantity of unregistered words in the sample translation. The unregistered word is a word that is not translated. The unregistered word is a critical problem of the neural network translation apparatus. The unregistered word is generally caused by an uncommon word in a sample document. Such a word infrequently appears, and is difficult to be translated by the machine translation system. The problem of the unregistered word is more severe in the neural network translation apparatus. Generally, a larger quantity of unregistered words appearing in a sample translation indicates lower quality of the sample translation.

When the preset feature includes the reconstruction, the feature value of the preset feature is a reconstruction score, and the step in which the machine translation system obtains the feature value of the preset feature of the sample translation may be:

translating, by the machine translation system, the sample translation into the source language to obtain a reconstructed document, where the sample translation includes at least one character of the target language, and the reconstructed document includes at least one character of the source language; and calculating a similarity between the sample document and the reconstructed document, and determining the similarity as a reconstruction score of the sample translation.

The machine translation system re-translates the sample translation into original text to obtain the reconstructed document, and obtains the reconstruction score of the sample translation based on the similarity between the sample document and the reconstructed document. The reconstruction score is a good indicator for evaluating the fidelity of the sample translation. Generally, a higher reconstruction score of the sample translation indicates higher fidelity and higher quality of the sample translation.

When the preset feature includes the translation length, the feature value of the preset feature is a translation length score, and the step in which the machine translation system obtains the feature value of the preset feature of the sample translation may be:

obtaining, by the machine translation system, a quantity of datum characters included in the sample translation based on a quantity of characters included in a sample document corresponding to the sample translation, and determining a difference between a quantity of characters included in the sample translation and the quantity of datum characters as a translation length score of the sample translation.

The machine translation system stores a correspondence between a quantity of characters included in a sample document and a quantity of datum characters included in a translation document. Correspondingly, the step in which the machine translation system obtains a quantity of datum characters included in the sample translation based on a quantity of characters included in a sample document corresponding to the sample translation may be:

obtaining, by the machine translation system based on the quantity of characters included in the sample document corresponding to the sample translation, a quantity of datum characters included in the sample document from the correspondence between a quantity of characters included in a sample document and a quantity of datum characters included in a translation document.

Sample translations in different languages may include different quantities of datum characters. Therefore, the machine translation system may also obtain the quantity of datum characters included in the sample translation with reference to the target language. Correspondingly, the step in which the machine translation system obtains a quantity of datum characters included in the sample translation based on a quantity of characters included in a sample document corresponding to the sample translation may be:

obtaining, by the machine translation system, the quantity of datum characters included in the sample translation based on the target language and the quantity of characters included in the sample document corresponding to the sample translation.

The machine translation system stores a correspondence between a quantity of characters included in a sample document, a target language, and a quantity of datum characters included in a translation document. Correspondingly, the step in which the machine translation system obtains the quantity of datum characters included in the sample translation based on the target language and the quantity of characters included in the sample document corresponding to the sample translation may be:

obtaining, by the machine translation system based on the target language and the quantity of characters included in the sample document corresponding to the sample translation, the quantity of datum characters included in the sample translation from the correspondence between a quantity of characters included in a sample document, a target language, and a quantity of datum characters included in a translation document.

For a characteristic of a relatively short sample translation caused by under-translation of the neural network translation apparatus, in this embodiment of this disclosure, whether under-translation exists in the sample translation can be evaluated to an extent based on the translation length. Generally, for a same sample document, when a translation length of a sample translation obtained by translating the sample document by the neural network translation apparatus is close to a translation length of a sample translation obtained by translating the sample document by the statistical translation apparatus, under-translation of the neural network translation device is unlikely to occur.

When the preset feature includes the coverage ratio, the feature value of the preset feature is a value of the coverage ratio, and the step in which the machine translation system obtains the feature value of the preset feature of the sample translation may be:

obtaining, by the machine translation system, a first word quantity and a second word quantity, where the first word quantity is a quantity of words included in the sample document, and the second word quantity is a quantity of translated words in the sample document; and calculating a ratio of the second word quantity to the first word quantity, and determining the ratio as a coverage ratio of the sample translation.

The coverage ratio is a ratio of translation of the sample document. The coverage ratio is designed for under-translation frequently occurring in the neural network translation apparatus. Generally, a higher coverage ratio of a sample translation indicates higher quality of the sample translation.

When the preset feature includes the lexicalization probability, the feature value of the preset feature is a value of the lexicalization probability, and the step in which the machine translation system obtains the feature value of the preset feature of the sample translation may be:

calculating, by the machine translation system, a matching degree between the sample document and the sample translation, and determining the matching degree as a lexicalization probability of the sample translation.

The machine translation system translates the sample translation into the source language to obtain the reconstructed document, where the reconstructed document includes at least one character of the source language; calculates a coverage ratio of the sample translation and a coverage ratio of the reconstructed document; and determines a sum of the coverage ratio of the sample translation and the coverage ratio of the reconstructed document as the lexicalization probability of the sample translation.

Step 2023: The machine translation system determines a recommendation rating of each sample translation based on the feature value of each preset feature of each sample translation, and an initial feature weight and an initial feature offset that are of each preset feature.

The machine translation system determines the recommendation rating of each sample translation by using a preset recommendation rating algorithm based on a feature value of each preset feature of each sample document, and an initial feature weight and an initial feature offset that are of each preset feature.

The preset recommendation rating algorithm can be set and changed as required. The preset recommendation rating algorithm is not specifically limited in this embodiment of this disclosure. For example, the preset recommendation rating algorithm may be a multilayer perceptron (MultiLayer Perceptron, MLP) algorithm or an artificial neural network (Artificial Neural Network, ANN) algorithm.

When the preset recommendation rating algorithm is MLP, this step may be:

determining, by the machine translation system, a recommendation rating of each sample document according to the following Formula 1 based on a feature value of each preset feature of the sample document, and an initial feature weight and an initial feature offset that are of each preset feature.

$$\text{Formula 1:} \quad f(x) = G(b^{(2)} + W^{(2)}(s(b^{(1)} + W^{(1)}x))) ,$$

where $f(x)$ is the recommendation rating of the sample translation; $x$ is the feature value of the preset feature; $b^{(1)}$ and $b^{(2)}$ are initial feature weights of two preset features, respectively; and $W^{(1)}$ and $W^{(2)}$ are initial feature offsets of the two preset features, respectively.

Step 2024: The machine translation system determines the second sample translation set based on the recommendation rating of each sample translation.

The machine translation system selects a sample translation with a highest recommendation rating from all sample translations corresponding to each sample document based on a recommendation rating of each sample translation corresponding to the sample document, and uses sample translations, corresponding to all sample documents, with highest recommendation ratings to form the second sample translation set.

Step 203: The machine translation system determines a first error recommendation rate based on the first sample translation set and the second sample translation set.

This step may be implemented in the following first implementation or second implementation. In the first implementation, this step may be:

determining, by the machine translation system, a first sample quantity and a second sample quantity, where the first sample quantity is a quantity of sample translations included in the first sample translation set (or the second sample translation set), and the second sample quantity is a quantity of different sample translations between the first sample translation set and the second sample translation set; and determining a ratio of the second sample quantity to the first sample quantity as the first error recommendation rate.

In the second implementation, this step may be implemented by using the following steps 2031 to 2034.

Step 2031: The machine translation system determines a third sample translation set and a second sample document set based on the first sample translation set and the second sample translation set.

The third sample translation set includes different sample translations between the first sample translation set and the second sample translation set, and the second sample document set includes sample documents corresponding to the different sample translations. In other words, the second sample document set includes a sample document corresponding to each sample translation in the third sample translation set.

Step 2032: The machine translation system determines a recommendation coefficient of each sample document in the second sample document set based on a recommendation rating of each sample translation in the third sample translation set.

One sample translation in the third sample translation set corresponds to a plurality of sample documents in the second sample document set. In this step, for each sample document in the third sample translation set, the machine translation system determines a recommendation weight of each sample document in the second sample document set based on the recommendation rating of each sample translation in the third sample translation set; and for each sample document in the second sample document set, determines a ratio of the recommendation weight of the sample document to a preset recommendation rating to obtain a recommendation rating ratio of the sample document, and selects a smaller value between the recommendation rating ratio of the sample document and a preset recommendation weight as the recommendation coefficient of the sample document.

The preset recommendation rating and the preset recommendation weight can be set and changed as required. The preset recommendation rating and the preset recommendation weight are not specifically limited in this embodiment of this disclosure. For example, the preset recommendation rating is 40 or 20, and the preset recommendation weight may be 0.8 or 1.

For example, the machine translation apparatuses include a neural network machine apparatus and a statistical translation apparatus; the preset recommendation rating is 40, and the preset recommendation weight is 1; sample translations corresponding to a sample document A are a sample translation A1 and a sample translation A2; a recommendation rating of the sample translation A1 is 1, and a recommendation rating of the sample translation A2 is 21. The machine translation system calculates a difference between the recommendation rating of the sample translation A1 and the recommendation rating of the sample translation A2, to obtain a recommendation rating difference 20; and determines a ratio of the recommendation rating difference to the preset recommendation rating to be 0.5 and selects a smaller value 0.5 from 0.5 and 1 (the preset recommendation weight) as the recommendation coefficient of the sample document.

In a conventional classification model, all translation apparatuses are of equal importance. However, if there is a small difference between recommendation ratings of sample translations obtained by all the translation apparatuses, incorrect classification does not greatly affect a recommendation result. If there is a relatively big difference between sample translations obtained by the translation apparatuses, incorrect classification greatly affects a recommendation result. Therefore, in this embodiment of this disclosure, the machine translation system determines the recommendation coefficient of each sample document, and subsequently determines the datum feature weight and the datum feature offset with reference to the recommendation coefficient of each sample document, thereby improving accuracy of the determined datum feature weight and datum feature offset.

Step 2033: The machine translation system determines a sample quantity ratio of a first sample quantity to a second sample quantity.

The machine translation system obtains the first sample quantity and the second sample quantity, and determines the sample quantity ratio of the first sample quantity to the second sample quantity. The first sample quantity is a quantity of sample documents included in the second sample document set, and the second sample quantity is a quantity of sample documents included in the first sample document set.

Step 2034: The machine translation system determines a product of the sample quantity ratio and the recommendation coefficient of each sample document in the second sample document set, to obtain the first error recommendation rate.

Step 204: The machine translation system determines a datum feature weight and a datum feature offset of each preset feature based on the first error recommendation rate, and an initial feature weight and an initial feature offset that are of each preset feature.

The machine translation system determines whether the first error recommendation rate meets a preset condition; and if the first error recommendation rate meets the preset condition, determines the initial feature weight and the initial feature offset of each preset feature as the datum feature weight and the datum feature offset of each preset feature, respectively; or

if the first error recommendation rate does not meet the preset condition, updates the initial feature weight and the initial feature offset of each preset feature by using a preset iterative algorithm, determines a second error recommendation rate based on an updated initial feature weight and an updated initial feature offset, and determines whether the second error recommendation rate meets the preset condition; and if the second error recommendation rate meets the preset condition, determines a feature weight and a feature offset of each preset feature at this moment as the datum feature weight and the datum feature offset of each preset feature, respectively; or if the second error recommendation rate does not meet the preset condition, updates the initial feature weight and the initial feature offset of each preset feature again until the second error recommendation rate meets the preset condition.

The preset condition may be that the error rate is less than a first preset threshold or a difference between two adjacently obtained error recommendation rates is less than a second preset threshold. The first preset threshold and the second preset threshold may be the same, or may be different. In addition, both the first preset threshold and the second preset threshold can be set and changed as required. The first preset threshold and the second preset threshold are not specifically limited in this embodiment of this disclosure. For example, the first preset threshold is 0.2 or 0.3, and the second preset threshold may be 0.1, 0.15, or the like.

In this embodiment of this disclosure, the datum feature weight and the datum feature offset of each preset feature are obtained through training by using the first sample document set and the first sample translation set, thereby improving accuracy of the determined datum feature weight and datum feature offset of each preset feature.

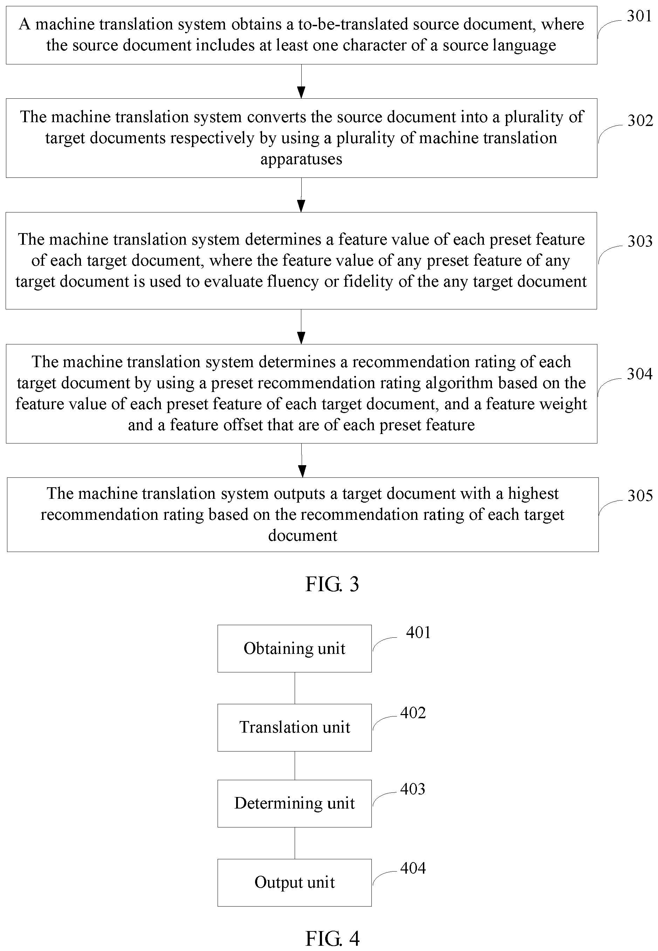

An embodiment of this disclosure provides a machine translation method. The method is applied to a machine translation system. Referring to FIG. 3, the method includes the following steps.

Step 301: The machine translation system obtains a to-be-translated source document, where the source document includes at least one character of a source language.

When a user translates the source document, a user terminal sends the to-be-translated source document to the machine translation system, and the machine translation system receives the source document sent by the user terminal.

Step 302: The machine translation system converts the source document into a plurality of target documents respectively by using a plurality of machine translation apparatuses.

One machine translation apparatus is configured to translate the source document into one target document, the target document includes at least one character of a target language, and the source language is different from the target language.

Step 303: The machine translation system determines a feature value of each preset feature of each target document, where the feature value of any preset feature of any target document is used to evaluate fluency or fidelity of the any target document.

The preset feature includes a first-type preset feature and a second-type preset feature, the first-type preset feature is used to evaluate fluency of a target document, and the second-type preset feature is used to evaluate fidelity of the target document. Correspondingly, this step may be:

> extracting, by the machine translation system, a feature value of each first-type preset feature of each target translation by using an extraction algorithm of each first-type preset feature; and/or extracting a feature value of each second-type preset feature of each target translation by using an extraction algorithm of each second-type preset feature; and
> using the feature value of each first-type preset feature of each target translation and/or the feature value of each second-type preset feature of each target translation to form a feature value of each preset feature of each target feature.

It should be noted that this step is the same as a process in which the machine translation system determines a feature value of each preset feature of the sample translation in step 2022. Details are not described herein again.

Step 304: The machine translation system determines a recommendation rating of each target document by using a preset recommendation rating algorithm based on the feature value of each preset feature of each target document, and a feature weight and a feature offset that are of each preset feature.

It should be noted that this step is the same as a process in which the machine translation system determines a recommendation rating of each sample translation based on the feature value of each preset feature of each sample document, and an initial feature weight and an initial feature offset that are of each preset feature in step 2023. Details are not described herein again.

Step 305: The machine translation system outputs a target document with a highest recommendation rating based on the recommendation rating of each target document.

The machine translation system selects the target document with the highest recommendation rating from all target documents based on the recommendation rating of each target document, and outputs the target document with the highest recommendation rating.

In this embodiment of this disclosure, the target document is converted into the target documents by using the plurality of machine translation apparatuses, the recommendation rating of each target document is determined, and the target document with the highest recommendation rating is output. The target document is translated by using the plurality of machine translation apparatuses, and the target document is output based on the recommendation rating of each target document, thereby improving accuracy of machine translation.

An embodiment of this disclosure provides a machine translation apparatus. Referring to FIG. 4, the apparatus includes: an obtaining unit 401, a translation unit 402, a determining unit 403, and an output unit 404.

The obtaining unit 401 is configured to perform steps 201 and 301 and the optional solutions thereof.

The translation unit 402 is configured to perform step 302 and the optional solution thereof.

The determining unit 403 is configured to perform steps 202, 203, 204, 303, and 304, and the optional solutions thereof.

The output unit 404 is configured to perform step 305 and the optional solution thereof.

In this embodiment of this disclosure, the target document is converted into the target documents by using the plurality of machine translation apparatuses, the recommendation rating of each target document is determined, and the target document with the highest recommendation rating is output. The target document is translated by using the plurality of machine translation apparatuses, and the target document is output based on the recommendation rating of each target document, thereby improving accuracy of machine translation.

It should be noted that division of the foregoing function modules is merely used as an example for description when the machine translation apparatus provided in the foregoing embodiment performs machine translation. During actual application, the foregoing functions may be assigned to different function modules for completion depending on a requirement. To be specific, an internal structure of the device is divided into different function modules to complete all or some of the functions described above. In addition, the machine translation apparatus provided in the foregoing embodiment belongs to the same concept as the machine translation method embodiments. For details about a specific implementation process thereof, refer to the method embodiments. Details are not described herein again.

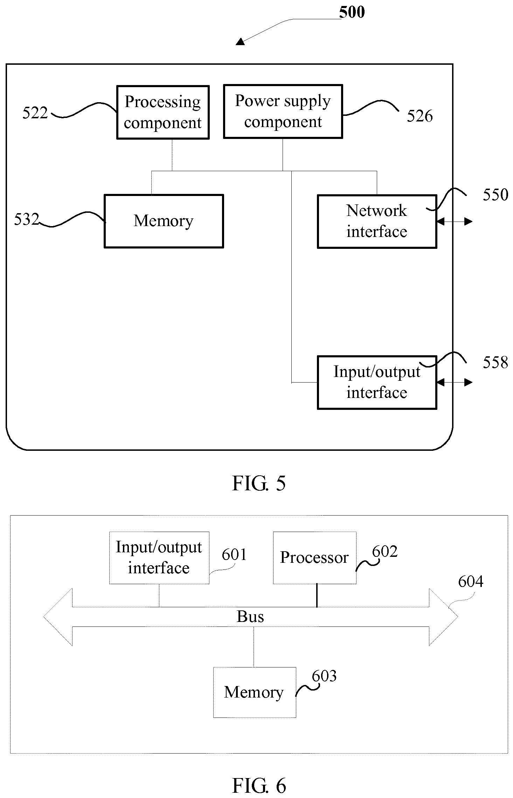

FIG. 5 is a block diagram of a machine translation apparatus 500 according to an example embodiment. For example, the apparatus 500 may be provided as a server. Referring to FIG. 5, the apparatus 500 includes a processing component 522 further including one or more processors, and a memory resource represented by a memory 532 and configured to store an instruction that is executable by the processing component 522, for example, an application program. The application program stored in the memory 532 may include one or more modules, each of which corresponds to one group of instructions. In addition, the processing component 522 is configured to execute the instruction, to perform the foregoing machine translation method.

The apparatus 500 may further include a power supply component 526 configured to perform power management for the apparatus 500, a wired or wireless network interface 550 configured to connect the apparatus 500 to a network, and an input/output (I/O) interface 558. The apparatus 500 can operate based on an operating system stored in the memory 532, such as Windows Server™, Mac OS X™, Unix™, Linux™, or FreeBSD™.

An embodiment of this disclosure provides a system chip, applied to a machine translation system. Referring to FIG. 6, the system chip includes an input/output interface 601, at least one processor 602, a memory 603, and a bus 604. The input/output interface 601 is connected to the at least one processor 602 and the memory 603 by using the bus 604, and the input/output interface 601 is configured to obtain a to-be-translated source document and output a target document. The at least one processor 602 executes an instruction stored in the memory 603, so that the machine translation system performs the foregoing machine translation method.

In a possible implementation, the processor in the foregoing embodiments may be a central processing unit (CPU), a general purpose processor, a digital signal processor (DSP), an application-specific integrated circuit (ASIC), a field programmable gate array (FPGA) or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the DSP and a microprocessor.

Steps of the method or algorithm that are described with reference to the content in this disclosure may be implemented by hardware, or may be implemented in a manner of executing a software instruction by a processor. The software instruction may include a corresponding software module. The software module may be located in a RAM memory, a flash memory, a ROM memory, an EPROM memory, an EEPROM memory, a register, a hard disk, a removable hard disk, a CD-ROM, or a storage medium of any other form known in the art. For example, a storage medium is coupled to a processor, so that the processor can read information from the storage medium or write information into the storage medium. Certainly, the storage medium may be a component of the processor. The processor and the storage medium may be located in the ASIC. In addition, the ASIC may be located in a terminal. Certainly, the processor and the storage medium may exist in the terminal as discrete components.

A person skilled in the art should be aware that in the foregoing one or more examples, functions described in this application may be implemented by hardware, software, firmware, or any combination thereof. When this application is implemented by software, the foregoing functions may be stored in a computer readable medium or transmitted as one or more instructions or code in the computer readable medium. The computer readable medium includes a computer storage medium and a communications medium, where the communications medium includes any medium that enables a computer program to be transmitted from one place to another place. The storage medium may be any available medium accessible to a general-purpose or special-purpose computer.

The term "and/or" in this disclosure describes only an association relationship for describing associated objects and represents that three relationships may exist. For example, A and/or B may represent the following three cases: Only A exists, both A and B exist, and only B exists. In addition, the character "/" in the specification generally indicates an "or" relationship between the associated objects.

A person of ordinary skill in the art may understand that all or some of the steps of the embodiments may be implemented by hardware or a program instructing related hardware. The program may be stored in a computer readable storage medium. The storage medium may be a read-only memory, a magnetic disk, an optical disc, or the like.

The foregoing descriptions are merely optional embodiments of this disclosure, but are not intended to limit this disclosure. Any modification, equivalent replacement, and improvement made without departing from the spirit and principle of this disclosure shall fall within the protection scope of this disclosure.

**Claims**

1. A machine translation method, wherein the method comprises:

obtaining a to-be-translated source document, wherein the source document comprises at least one character of a source language;

converting the source document into a plurality of target documents respectively by using a plurality of machine translation apparatuses, wherein one machine translation apparatus is configured to translate the source document into one target document, the target document comprises at least one character of a target language, and the source language is different from the target language;

determining a feature value of each preset feature of each target document, wherein a feature value of any preset feature of any target document is used to evaluate fluency and/or fidelity of the any target document;

determining a recommendation rating of each target document based on the feature value of each preset feature of each target document; and

outputting a target document with a highest recommendation rating based on the recommendation rating of each target document.

2. The method according to claim 1, wherein the determining a recommendation rating of each target document based on the feature value of each preset feature of each target document comprises:

determining the recommendation rating of each target document by using a preset recommendation rating algorithm based on the feature value of each preset feature of each target document, and a datum feature weight and a datum feature offset of each preset feature, wherein the datum feature weight and the datum feature offset of each preset feature are obtained through training based on a first sample document set and a first sample translation set, the first sample document set comprises at least one to-be-translated sample document, and the first sample translation set comprises a reference translation corresponding to each sample document.

3. The method according to claim 2, wherein before the determining a recommendation rating of each target document based on the feature value of each preset feature of each target document, the method further comprises:

obtaining the first sample document set and the first sample translation set;

determining a second sample translation set based on the first sample document set, wherein the second sample translation set comprises a sample translation corresponding to each sample document;

determining a first error recommendation rate based on the first sample translation set and the second sample translation set; and

determining the datum feature weight and the datum feature offset of each preset feature based on the first error recommendation rate, and an initial feature weight and an initial feature offset that are of each preset feature.

4. The method according to claim 3, wherein the determining a second sample translation set based on the first sample document set comprises:

converting each sample document in the first sample document set into a plurality of sample translation sets respectively by using the plurality of machine translation apparatuses, wherein one sample translation set comprises at least one target-language sample translation into which one machine translation apparatus translates each sample document;

determining a feature value of each preset feature of each sample translation in the plurality of sample translation sets;

determining a recommendation rating of each sample translation based on the feature value of each preset feature of each sample translation, and an initial feature weight and an initial feature offset that are of each preset feature; and

determining the second sample translation set based on the recommendation rating of each sample translation.

5. The method according to claim 3, wherein the determining the datum feature weight and the datum feature offset of each preset feature based on the first error recommendation rate, and an initial feature weight and an initial feature offset that are of each preset feature comprises:

if the first error recommendation rate meets a preset condition, determining the initial feature weight and the initial feature offset of each preset feature as the datum feature weight and the datum feature offset of each preset feature, respectively; or

if the first error recommendation rate does not meet a preset condition, updating the initial feature weight and the initial feature offset of each preset feature by using a preset iterative algorithm until a second error recommendation rate meets the preset condition, wherein the second error recommendation rate is determined based on an updated initial feature weight and an updated initial feature offset; and determining a feature weight and a feature offset used when the second error recommendation rate meets the preset condition as the datum feature weight and the datum feature offset of each preset feature.

**6.** The method according to claim 3, wherein the determining a first error recommendation rate based on the first sample translation set and the second sample translation set comprises:

determining a third sample translation set and a second sample document set based on the first sample translation set and the second sample translation set, wherein the third sample translation set comprises different sample translations between the first sample translation set and the second sample translation set, and the second sample document set comprises sample documents corresponding to the different sample translations; determining a recommendation coefficient of each sample document in the second sample document set based on a recommendation rating of each sample translation in the third sample translation set; determining a sample quantity ratio of a first sample quantity to a second sample quantity, wherein the first sample quantity is a quantity of sample documents comprised in the second sample document set, and the second sample quantity is a quantity of sample documents comprised in the first sample document set; and determining a product of the sample quantity ratio and the recommendation coefficient of each sample document in the second sample document set, to obtain the first error recommendation rate.

**7.** The method according to claim 6, wherein the determining a recommendation coefficient of each sample document in the second sample document set based on a recommendation rating of each sample translation document in the third sample translation document set comprises:

determining a recommendation weight of each sample document in the second sample document set based on the recommendation rating of each sample translation in the third sample translation set; and determining a ratio of the recommendation weight of each sample document in the second sample document set to a preset recommendation rating to obtain a recommendation rating ratio of the sample document, and selecting a smaller value between the recommendation rating ratio of the sample document and a preset recommendation weight as the recommendation coefficient of the sample document.

**8.** The method according to claim 1, wherein the preset feature comprises a first-type preset feature and/or a second-type preset feature, the first-type preset feature is used to evaluate fluency of a target document, and the second-type preset feature is used to evaluate fidelity of the target document; and the determining a feature value of each preset feature of each target translation comprises:

extracting a feature value of each first-type preset feature of each target translation by using an extraction algorithm of each first-type preset feature; and/or extracting a feature value of each second-type preset feature of each target translation by using an extraction algorithm of each second-type preset feature; and using the feature value of each first-type preset feature of each target translation and/or the feature value of each second-type preset feature of each target translation to form a feature value of each preset feature of each target feature.

**9.** A machine translation apparatus, wherein the apparatus comprises:

an obtaining unit, configured to obtain a to-be-translated source document, wherein the source document comprises at least one character of a source language; a translation unit, configured to convert the source document into a plurality of target documents respectively by using a plurality of machine translation apparatuses, wherein one machine translation apparatus is configured to translate the source document into one target document, the target document comprises at least one character of a target language, and the source language is different from the target language; a determining unit, configured to determine a feature value of each preset feature of each target document, wherein a feature value of any preset feature of any target document is used to evaluate fluency and/or fidelity of the any target document, wherein the determining module is further configured to determine a recommendation rating of each target document based on the feature value of each preset feature of each target document; and

an output unit, configured to output a target document with a highest recommendation rating based on the recommendation rating of each target document.

10. The apparatus according to claim 9, wherein
the determining unit is further configured to determine the recommendation rating of each target document by using a preset recommendation rating algorithm based on the feature value of each preset feature of each target document, and a datum feature weight and a datum feature offset of each preset feature, wherein the datum feature weight and the datum feature offset of each preset feature are obtained through training based on a first sample document set and a first sample translation set, the first sample document set comprises at least one to-be-translated sample document, and the first sample translation set comprises a reference translation corresponding to each sample document.

11. The apparatus according to claim 10, wherein the apparatus further comprises:

the obtaining unit is further configured to obtain the first sample document set and the first sample translation set;
the determining unit is further configured to determine a second sample translation set based on the first sample document set, wherein the second sample translation set comprises a sample translation corresponding to each sample document;
the determining unit is further configured to determine a first error recommendation rate based on the first sample translation set and the second sample translation set; and
the determining unit is further configured to determine the datum feature weight and the datum feature offset of each preset feature based on the first error recommendation rate, and an initial feature weight and an initial feature offset that are of each preset feature.

12. The apparatus according to claim 11, wherein
the translation unit is further configured to convert each sample document in the first sample document set into a plurality of sample translation sets respectively by using the plurality of machine translation apparatuses, wherein one sample translation set comprises at least one target-language sample translation into which one machine translation apparatus translates each sample document; and
the determining unit is further configured to: determine a feature value of each preset feature of each sample translation in the plurality of sample translation sets; determine a recommendation rating of each sample translation based on the feature value of each preset feature of each sample translation, and an initial feature weight and an initial feature offset that are of each preset feature; and determine the second sample translation set based on the recommendation rating of each sample translation.

13. The apparatus according to claim 11, wherein
the determining unit is further configured to: if the first error recommendation rate meets a preset condition, determine the initial feature weight and the initial feature offset of each preset feature as the datum feature weight and the datum feature offset of each preset feature, respectively; or
the determining unit is further configured to: if the first error recommendation rate does not meet a preset condition, update the initial feature weight and the initial feature offset of each preset feature by using a preset iterative algorithm until a second error recommendation rate meets the preset condition, wherein the second error recommendation rate is determined based on an updated initial feature weight and an updated initial feature offset, and determine a feature weight and a feature offset used when the second error recommendation rate meets the preset condition as the datum feature weight and the datum feature offset of each preset feature.

14. The apparatus according to claim 11, wherein
the determining unit is further configured to: determine a third sample translation set and a second sample document set based on the first sample translation set and the second sample translation set, wherein the third sample translation set comprises different sample translations between the first sample translation set and the second sample translation set, and the second sample document set comprises sample documents corresponding to the different sample translations; determine a recommendation coefficient of each sample document in the second sample document set based on a recommendation rating of each sample translation in the third sample translation set; determine a sample quantity ratio of a first sample quantity to a second sample quantity, wherein the first sample quantity is a quantity of sample documents comprised in the second sample document set, and the second sample quantity is a quantity of sample documents comprised in the first sample document set; and determine a product of the sample quantity ratio and the recommendation coefficient of each sample document in the second sample document set, to obtain the first error recommendation rate.

**15.** The apparatus according to claim 14, wherein
the determining unit is further configured to: determine a recommendation weight of each sample document in the second sample document set based on the recommendation rating of each sample translation in the third sample translation set; and determine a ratio of the recommendation weight of each sample document in the second sample document set to a preset recommendation rating to obtain a recommendation rating ratio of the sample document, and select a smaller value between the recommendation rating ratio of each sample document and a preset recommendation weight as the recommendation coefficient of the sample document.

**16.** The apparatus according to claim 10, wherein the preset feature comprises a first-type preset feature and/or a second-type preset feature, the first-type preset feature is used to evaluate fluency of a target document, and the second-type preset feature is used to evaluate fidelity of the target document;
the determining unit is further configured to: extract a feature value of each first-type preset feature of each target translation by using an extraction algorithm of each first-type preset feature; and/or extract a feature value of each second-type preset feature of each target translation by using an extraction algorithm of each second-type preset feature; and
the determining unit is further configured to use the feature value of each first-type preset feature of each target translation and/or the feature value of each second-type preset feature of each target translation to form a feature value of each preset feature of each target feature.

**17.** A machine translation apparatus, wherein the apparatus comprises: a processing component comprising one or more processors, and a memory resource represented by a memory and configured to store an instruction that is executable by the processing component, wherein
the processing component is configured to execute the instruction, to perform the machine translation method according to any one of claims 1 to 8.

**18.** A computer readable storage medium, wherein a computer program is stored in the computer readable storage medium, and when the program is executed by a processor, the machine translation method according to any one of claims 1 to 8 is implemented.

Target document with a highest recommendation rating

Recommendation apparatus

10

Target document

Target document

20

Neural network translation apparatus

20

Statistical translation apparatus

Source document

FIG. 1

A machine translation system obtains a first sample document set and a first sample translation set, where the first sample document set includes at least one to-be-translated sample document, and the first sample translation set includes a reference translation corresponding to each sample document — 201

The machine translation system determines a second sample translation set based on the first sample document set, where the second sample translation set includes a sample translation corresponding to each sample document — 202

The machine translation system determines a first error recommendation rate based on the first sample translation set and the second sample translation set — 203

The machine translation system determines a datum feature weight and a datum feature offset of each preset feature based on the first error recommendation rate, and an initial feature weight and an initial feature offset that are of each preset feature — 204

FIG. 2

A machine translation system obtains a to-be-translated source document, where the source document includes at least one character of a source language ⌐ 301

The machine translation system converts the source document into a plurality of target documents respectively by using a plurality of machine translation apparatuses ⌐ 302

The machine translation system determines a feature value of each preset feature of each target document, where the feature value of any preset feature of any target document is used to evaluate fluency or fidelity of the any target document ⌐ 303

The machine translation system determines a recommendation rating of each target document by using a preset recommendation rating algorithm based on the feature value of each preset feature of each target document, and a feature weight and a feature offset that are of each preset feature ⌐ 304

The machine translation system outputs a target document with a highest recommendation rating based on the recommendation rating of each target document ⌐ 305

FIG. 3

Obtaining unit ⌐ 401

Translation unit ⌐ 402

Determining unit ⌐ 403

Output unit ⌐ 404

FIG. 4

**500**

FIG. 5

FIG. 6

## INTERNATIONAL SEARCH REPORT

| International application No. |
|---|
| **PCT/CN2018/088387** |

**A.    CLASSIFICATION OF SUBJECT MATTER**

G06F 17/28(2006.01)i

According to International Patent Classification (IPC) or to both national classification and IPC

**B.    FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNTXT; CNABS; SIPOABS, CNKI, DWPI: 多个, 机器翻译, 评分, multiple machine translation, score

**C.    DOCUMENTS CONSIDERED TO BE RELEVANT**

| Category* | Citation of document, with indication, where appropriate, of the relevant passages | Relevant to claim No. |
|---|---|---|
| X | CN 103678285 A (FUJITSU LIMITED) 26 March 2014 (2014-03-26)<br>description, paragraphs 36-76, 129-136 and 151-159 | 1-18 |
| A | US 2007219774 A1 (MICROSOFT CORP.) 20 September 2007 (2007-09-20)<br>entire document | 1-18 |
| A | CN 102789451 A (BEIJING BAIDU NETCOM SCIENCE AND TECHNOLOGY CO., LTD.)<br>21 November 2012 (2012-11-21)<br>entire document | 1-18 |
| A | WO 2013148930 A1 (LIONBRIDGE TECHNOLOGIES INC.) 03 October 2013 (2013-10-03)<br>entire document | 1-18 |

☐ Further documents are listed in the continuation of Box C.        ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 July 2018** | **16 August 2018** |

| Name and mailing address of the ISA/CN | Authorized officer |
|---|---|
| **State Intellectual Property Office of the P. R. China**<br>**No. 6, Xitucheng Road, Jimenqiao Haidian District, Beijing**<br>**100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/088387**

| Patent document cited in search report | | | Publication date (day/month/year) | Patent family member(s) | | | Publication date (day/month/year) |
|---|---|---|---|---|---|---|---|
| CN | 103678285 | A | 26 March 2014 | None | | | |
| US | 2007219774 | A1 | 20 September 2007 | US | 7209875 | B2 | 24 April 2007 |
| | | | | US | 2005102130 | A1 | 12 May 2005 |
| | | | | US | 7496496 | B2 | 24 February 2009 |
| CN | 102789451 | A | 21 November 2012 | CN | 102789451 | B | 03 June 2015 |
| WO | 2013148930 | A1 | 03 October 2013 | US | 2017344537 | A1 | 30 November 2017 |
| | | | | US | 2013262080 | A1 | 03 October 2013 |
| | | | | EP | 2831765 | A1 | 04 February 2015 |
| | | | | US | 9141606 | B2 | 22 September 2015 |
| | | | | EP | 2831765 | A4 | 31 August 2016 |
| | | | | US | 2015363394 | A1 | 17 December 2015 |
| | | | | US | 9747284 | B2 | 29 August 2017 |
| | | | | CA | 2867880 | A1 | 03 October 2013 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201710386617